# EUROPEAN PATENT SPECIFICATION

(11) **EP 4 059 352 B1**
(45) Date of publication and mention of the grant of the patent: **12.07.2023**
(21) Application number: 21163182.5
(22) Date of filing: 17.03.2021
(51) Int. Cl.: A23L 3/36, F25D 13/06, A23L 3/375, F25D 3/11

(54) **SYSTEM AND METHOD FOR PROCESSING FOOD PRODUCTS BY AT LEAST PARTIAL FREEZING OR CHILLING**
SYSTEM UND VERFAHREN ZUR VERARBEITUNG VON NAHRUNGSMITTELN DURCH MINDESTENS TEILWEISES GEFRIEREN ODER KÜHLEN
SYSTÈME ET PROCÉDÉ DE TRAITEMENT DE PRODUITS ALIMENTAIRES PAR CONGÉLATION OU REFROIDISSEMENT AU MOINS PARTIEL(LE)

(43) Date of publication of application: 21.09.2022
(73) Proprietor: L'Air Liquide, Société Anonyme pour l'Etude et l'Exploitation des Procédés Georges Claude, 75007 Paris (FR)
(72) Inventor: BRUGGEMAN, Beny, 1130 Brussels (BE)
(74) Representative: Keenway Patentanwälte Neumann Heine Taruttis

(56) References cited:
- WO-A1-2010/104526
- GB-A- 518 660
- US-A- 5 299 426
- US-A1- 2010 163 370

## Description

Subject matter of the present application is a system and a method for processing food products by at least partial freezing or chilling in which the food products are agitated while being conveyed through a tunnel provided with a cooling agent like liquid and/or gaseous nitrogen or liquid carbon dioxide.

Tunnel freezers for freezing products are known. It is known that it may happen that the food products are unintentionally adhering to each other or to a belt by which the food products are conveyed through the tunnel. To solve this issue it is known e.g. from US 2010/0163370 A1 and EP 2 382 431 B1 to agitate the respective belt and the food products thereon by lifting means having a cammed axe. This system is complex and needs frequently maintenance. It allows only a specific agitation of the product. An apparatus for freezing food products on an endless conveyor having a product displacement mechanism is also known from GB518660.

The object of the invention is to improve the prior art.

The object is solved with the system and the method according to the independent claims. Advantageous refinements are presented in the dependent claims. The features described in the claims and in the description can be combined with each other in any technologically reasonable manner.

The system for processing food products by at least partial freezing or chilling according to the present invention comprises
an endless conveying belt having a first upper run and a first lower run being drive able by at least one first drive drum, said conveying belt defining an inner space which is delimited by the first upper run and the first lower run,
an endless supporting belt being provided within the inner space, being drivable by at least one second drive drum, said supporting belt having a second upper run and a second lower run;
wherein the first upper run of the conveying belt has a first side for receiving the food products and a second side being opposite to the first side, said second side being oriented towards the second upper run of the supporting belt
whereas the conveying belt and the supporting belt are at least in part situated with in a tunnel,
said system further comprising at least a cooling agent supply for suppling cooling agent into the tunnel,
wherein the supporting belt comprises a multitude of cross-rods each defining a local rise oriented towards the conveying belt,
wherein the first upper run of the conveying belt is supported by cross-rods of the second upper run of the supporting belt.

The term food product is to be understood to comprise convenience food products, e.g. pizza, food, e.g. vegetables, meat pieces and/or intermediate food products e.g. hamburger patties, mixtures of vegetables, meat pieces sauce comprising grease and aromatics, diced and/or sliced products. The term chilling is understood as reducing the temperature of the food product towards +4°C. The term freezing is understood such that the temperature of the food products descends to -18°C. At that temperature, it is known most of the liquid in the food product is turned into solid. E.g. water and/or fat as liquid is turned solid. Partial freezing is in particular understood that only a part of the food product is frozen. Partial freezing includes in particular the surface of the food products (known as "crusting"). Preferably, the system as described here is used for crusting while subsequent freezers are used for the complete freezing of the food product. By this it can be avoided that the frozen food products adhere to one another and/or to the belt. Preferably, the food products are subject to an IQF (individually quick freezing) process wherein the individual food products, such as diced and/or sliced products, in particular covered with a liquid comprising fat and/or water, are frozen individually i.e. without adhering to other food products and/or to the belt. This allows to use the individually frozen food products in well-defined quantities allowing the customer to use an amount of the food products being freely determinable, e.g. allowing the customer to define the amount of the food products to be heated after being taken from the freezer.

An endless belt is a continuous belt. The conveying belt has a first upper run and a first lower run. The food products are received on a first side of the first upper run being the upper side of the first upper run. A second side of the first upper run being opposite to the first side is oriented to an inner space the outer perimeter of which is defined by the conveying belt. In this inner space which is delimited by the first upper run and the first lower run the supporting belt having a second upper run and a second lower run is arranged. Thus, the second side of the first upper run of the conveying belt is oriented to the second upper run.

The supporting belt comprises a multitude of cross-rods each defining a local rise oriented towards the conveying belt. This means that the cross-rods each define a local extremum in the mathematical sense. In a preferred embodiment at least a part of the cross-rods are an integral part of the supporting belt. In a further preferred embodiment at least a part of the cross-rods are inserted into or attached to the supporting belt, e.g. by clipping and/or providing receptables in the supporting belt in which the cross-rod is insert able. The latter embodiment allows to adapt the position of the cross-rods, e.g. depending on the food products to be processed, e.g. depending on the necessary agitation of the conveying belt and the food products.

Preferably, the system comprises a cooling agent supply in the tunnel. Preferably, the cooling agent supply is designed to apply the cooling agent, preferably liquid nitrogen or liquid carbon dioxide, on the first side of the first upper run of the conveying belt. Preferably, the cooling agent supply comprises at least one nozzle being directed to the first side of the first upper run of the conveying belt. Preferably, by this at least one nozzle cooling agent can be applied to the first side of the first upper run of the conveying belt and the food products thereon.

According to the invention, the first upper run of the conveying belt is supported by the cross-rods of the second upper run of the supporting belt. This means that at least a part of the length of the first upper run, preferably at least 85% of the length of the first upper run are supported by the cross-rods in the second upper run of the supporting belt. i.e. are in the direction of gravity only in contact with the cross-rods to support the conveying belt at least in the part of the conveying belt on which food products are conveyed through the tunnel. By the cross-rods and the respective local rises defined by the cross-rods the conveying belt can comprise local rises as well depending on the size of the cross-rods and the tension applied to the conveying belt. Both the conveying belt and the supporting belt are drivable, preferably by respective drive drums, which are in frictional contact with the respective belt.

In use, the conveying belt is driven with a first velocity while the supporting belt is driven with a second velocity. The second velocity is independently controllable from the first velocity. Preferably, the first velocity and the second velocity differ by magnitude and/or direction. This means there is a relative movement between the conveying belt and the supporting belt which moves the conveying belt relative to the cross-rods. This leads to an agitation of the first upper run of the conveying belt and, consequently, to an agitation of the food products on the first side of the first upper run of the conveying belt. This agitation results in a movement of the food products such that the food products do not adhere neither to the conveying belt nor to one another. In particular, the second velocity can be zero.

The respective system is easy to design, build and maintain. It is flexible regarding the kind and amount of agitation and allows to define the agitation depending on the type of food products to be processed.

The tension of both the conveying belt is preferably adjustable, i.e. using drive drums to drive the conveying belt. Preferably, the system can be used in a first operating mode in which the conveying belt comprises a slack and a second operating mode in which the tension of the conveying belt is increased compared to the first operating mode such that the conveying belt is having a minimum slack and is in particular basically flat (with the exception of the local rises due to the cross-rods). The first operating mode is preferably used for small size food products such as e.g. diced or sliced vegetable and/or meat pieces, preferably coated with a sauce, while the second operating mode is preferably used for large size food products and/or food products having a defined orientation, e.g. burger patties or Pizza.

Both in the first operating mode and the second operating mode the first upper run of the conveying belt is moved in a processing direction. This allows to define a first end of the first upper run of the conveying belt and an opposite second end of the first upper run of the conveying belt with the processing direction being oriented from the first end to the second end. In use, at the first end the food products to be frozen are applied to the conveying belt whereas at the second end the at least partly frozen and/or chilled food products are separated from the conveying belt. The tension of the conveying belt can easily be adapted by either pulling or pushing the conveying belt in the processing direction. This means that it is preferred to use the conveying belt in the first operating mode by pushing the first upper run of the conveying belt in the processing direction, i.e. by driving the conveying belt using a first drive drum at the first end of the first upper run of the conveying belt, generating the desired slack in the conveying belt. Likewise, it is preferred to use the conveying belt in the second operating mode by pulling the first upper run of the conveying belt in the processing direction, i.e. by driving the conveying belt using another first drive drum at the second end of the first upper run of the conveying belt, generating the desired minimum slack in the conveying belt.

Preferably, the cross-rods comprise rollers being in contact with the second upper run. The cross-rods can be formed as rollers, i.e. having a curved, preferably cylindrical, shape. Alternatively or cumulatively, the rollers are attachable to the cross-rods allowing changing the rollers depending on the necessary agitation. In particular, rollers with different diameters can be used to allow adapting the amplitude of the agitation.

Preferably, the supporting belt is extending in a supporting belt direction, wherein the supporting belt comprises two drive chains forming the lateral parts of the supporting belt. The term lateral is understood with reference to the supporting belt direction. This allows an easy design of the supporting belt ensuring that the supporting belt is easily drivable by respective second drive drums. It is further preferred in this context that the two drive chains are only connected to each other by cross-rods. This allows a design of the supporting belt while ensuring that only the cross-rods are in contact with the conveying belt for supporting the same.

Preferably, the system comprises two first drive drums being individually controllable allowing to move the first upper run of the conveying belt in a processing direction. This allows to change the tension of the first upper run of the conveying belt by either pushing or pulling the first upper run in the processing direction.

Preferably, wherein the first upper run of the conveying belt is preferably movable in a processing direction, whereas the system further comprises two second drive drums allowing to move the second upper run of the supporting belt in a supporting belt direction being parallel or antiparallel to the processing direction.

The use of two drive drums for a respective belt allows an independent movement of the respective belt and in particular to pull the respective belt into two directions. This ensures a flexible usability of the respective belt. In particular in a preferred embodiment both the conveying belt and the supporting belt have two first drive drums and two second drive drums to allow a wide adaptability of the agitation of the conveying belt and the food products conveyed thereon.

Preferably, the cross-rods are distributed equidistantly over the supporting belt. This allows a uniform agitation over the length of the conveying belt.

Preferably, at least some, in particular all, cross-rods at least span the width of the conveying belt. This means that the length of the cross-rods is at least as large as the width of the conveying belt. This allows a uniform agitation over the width of the conveying belt.

Preferably, at least some of the cross-rods are formed such that only a part of the width of the supporting belt is spanned defining a local rise both in the length direction and the width direction of the supporting belt and, subsequently, of the conveying belt. This allows to generate complex agitation pattern.

According to a further aspect of the present invention a method for processing food products by at least partial freezing or chilling is proposed using a system according to present invention, wherein the conveying belt is moved such that the first upper run is moved with a first velocity having one defined processing direction and a non-zero first magnitude and the food products to be processed are positioned on the first side of the first upper run at a first end of the first upper run and are removed from the first side of the first upper run at a second end of the first upper run being downstream in the processing direction from the first end, while cooling agent is introduced into the tunnel intermittently or continuously.

As cooling agent preferably a liquefied gas is used, preferable liquid nitrogen or liquid carbon dioxide, which is preferably sprayed or dosed onto the first side of the first upper run. The evaporation/sublimation enthalpy of the liquid nitrogen or liquid carbon dioxide can be used as a further effect for at least partly freezing or chilling the food products. If the food products are only to be chilled, it is possible to introduce a cool gas such as gaseous nitrogen as a cooling agent. Depending on the amount of food products to be processed, the initial temperature of the food products when being applied to the conveying belt and the desired target temperature of the food products it is possible to adapt the amount of cooling agent and the kind or composition of the cooling agent, e.g. a mixture of gaseous and liquid nitrogen. An intermittent introduction of cooling agent is to be understood that the cooling agent is introduced in pulses, which is one preferred way of introduction when using liquid carbon dioxide as a cooling agent. In contrast thereto a continuous introduction is understood to cover a continuous introduction of cooling agent. The continuous introduction is a preferred way of introduction when using liquid nitrogen as a cooling agent.

At the first end of the first upper run preferably a loading table is arranged, whereas at the second end a product off load is arranged. Preferably, in the cold atmosphere in the tunnel, the cold gases are circulated or agitated, e.g. by one or more fans. By the movement of the conveying belt relative to the supporting belt and the local rises defined by the cross-rods the conveying belt and the food products thereon are agitated and the adherence of the food products to the conveying belt and/or to one another is avoided. To reach an agitation the supporting belt is either moved as well with a different velocity compared to the conveying belt or the supporting belt is not moved resulting in a relative movement between the conveying belt and the supporting belt. If no agitation is desired the supporting belt is moved with the first velocity as well.

Preferably, the supporting belt is moved such that the second upper run is moved with a second velocity having a pre-determinable supporting belt direction and a non-zero second magnitude. The movement of the supporting belt allows a wide adjustability of the relative movement between conveying belt and supporting belt and the cross-rods in the second upper run of the supporting belt and, thus, the agitation of the food products. In this context, preferably, the first magnitude differs from the second magnitude.

Preferably, the supporting belt direction is parallel to the processing direction. In this case a so called co current agitation takes place, the supporting belt is moved in the same direction as the conveying belt. This co current agitation is preferably used for food products having a relatively dry surface as the risk of adhering to the conveying belt is relatively low such that a lower magnitude agitation is sufficient.

Preferably, the supporting belt direction is antiparallel to the processing direction. In this case, a so-called counter current agitation takes place; the supporting belt is moved in an opposite direction as the conveying belt. This counter current agitation is preferably used for food products having a relatively wet surface, e.g. for food products being covered in a liquid comprising fat and/or water such as a sauce. These food products having a relatively wet surface need a higher level agitation which is the result of a counter current agitation to avoid adhering of the food products to the conveying belt and/or to one another.

Preferably, the conveying belt is arranged with a tension allowing for a slack of the belts in the first upper run and the second upper run, understood as the first operating mode. This is in particular preferred for food products of small size and/or having no preferred orientation as it allows for a strong agitation of the food products.

Preferably, the conveying belt is arranged with a maximum tension allowing a minimum slack of the belts understood as the second operating mode. A minimum slack is understood as the slack which is technically unavoidable due to the materials used. In this operating second mode the first upper run is basically flat with the exception of the local rises generated by the cross-rods as the conveying belt is only in contact with the cross-rods. This second operating mode is preferably used for larger surface food products and/or food products having a defined orientation, e.g. burger patties or pizza. In this second operating mode the agitation is usually smaller than in the first operating mode avoiding the food products to turn over due to the agitation.

Preferably, the cooling agent comprises liquid nitrogen. This means, either liquid nitrogen or a mixture of liquid nitrogen and gaseous nitrogen are introduced into the tunnel. Alternatively, the cooling agent comprises liquid carbon dioxide (CO₂). When liquid carbon dioxide is dosed into the tunnel carbon dioxide snow and gaseous carbon dioxide is generated within the tunnel.

In the following, the invention will be described with respect to the figure. The figure shows a preferred embodiment, to which the invention is not limited. The figure and the dimensions shown therein are only schematic. The figure shows:
Fig. 1 a longitudinal section of a part of an example of a system for processing food products in a first operating mode;
Fig. 2 a perspectival view of a part of the example of a system for processing food products in the first operating mode;
Fig. 3 a perspectival view of a conveying belt of the example of a system for processing food products in the first operating mode;
Fig. 4 a longitudinal section of an example of a system for processing food products in a second operating mode;
Fig. 5 a perspectival view of a part of the example of a system for processing food products in the second operating mode;
Fig. 6 a perspectival view of a conveying belt of the example of a system for processing food products in the second operating mode:
   Fig.7 a longitudinal section of an example of a system for processing food products with a first example of movements of the conveying belt and the supporting belt; and
   Fig. 8 a longitudinal section of an example of a system for processing food products with a second example of movements of the conveying belt and the supporting belt.

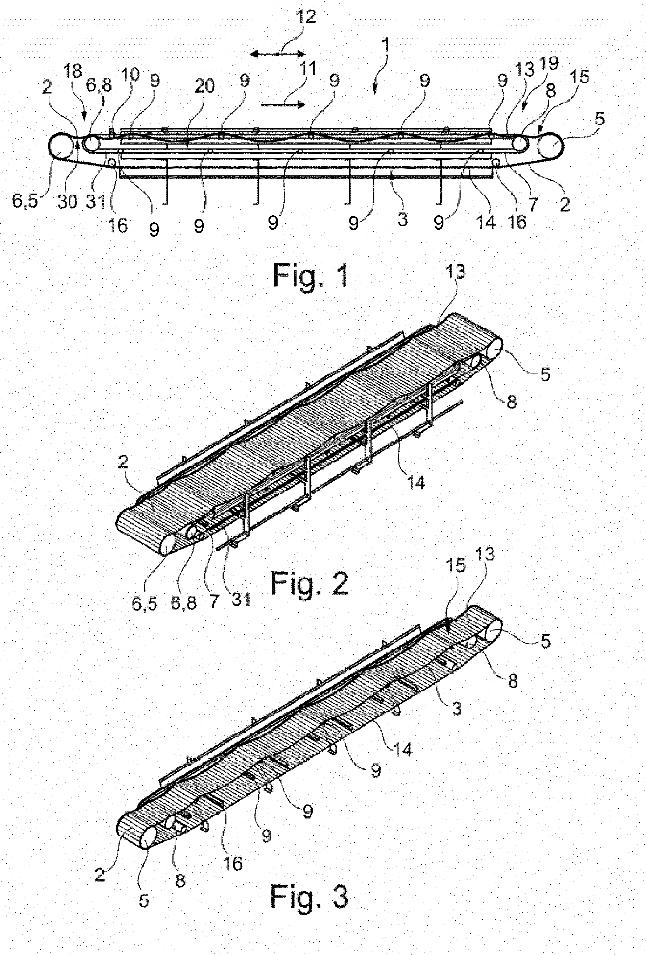

Fig. 1 shows a longitudinal section of an example of a system 1 for processing food products 10 in a first operating mode. The processing of the food products 10 comprises a freezing at least in part or chilling of the food products. Freezing in part comprises in particular a freezing only of the surface of the food product (known as "crusting"). Food products are understood to comprise convenience food products, e.g. hamburger patties, ready to eat dry products, frozen food, e.g. vegetables, and/or intermediate food products. Ingredients for other products, e.g. mixtures of vegetables, grease and aromatics. The food product is conveyed via an endless conveying belt 2 through a tunnel 3 which is provided with a cooling agent. The cooling agent is preferably liquid and/or gaseous nitrogen (N₂) or liquid, solid and/or gaseous carbon dioxide (CO₂). The operating temperature in the atmosphere in the tunnel 3 is preferably between -120°C [degrees centigrade] and -80°C for liquid nitrogen as cooling agent. The operating temperature is preferably between -65°C and -55°C for liquid carbon dioxide as cooling agent. The operating temperature is determined based on the nature of the food product, the cooling agent chosen and/or the desired final temperature of the food product at the end of the process.

The conveying belt 2 is preferably made from a metal, in particular from stainless steel, preferably food grade stainless steel. Alternatively, the conveying belt can be made from a porous material, e.g. from a fabric of synthetic or natural polymer, woven or nonwoven, preferably made of polyester.

The conveying belt 2 is driven by at least one first drive drum 5 and is kept under tension by at least one passive roller 6. The latter is in this embodiment a first drive drum 5 as well to allow to drive, i.e. to pull and to push the conveying belt 2, depending on which of the two first drive drums 5 is driving the conveying belt 2. Further support of the conveying belt 2 is provided by a supporting belt 7 as will be described in the following. The supporting belt 7 is driven as well by at least one second drive drum 8. The conveying belt 2 is driven independently from the supporting belt 7. The supporting belt 7 comprises two drive chains 31 that are situated at each lateral side of the supporting belt 7. These drive chains 31 are both made from a metal, preferably stainless steel, in particular food grade stainless steel. The drive chains 31 are connected by cross-rods 9. These cross-rods 9 are either a simple rod e.g. of round or rectangular cross section or do carry a roller or are in total formed as rollers. The rollers of the cross-rods 9 are preferably made from a thermoplastic material, in particular from polyethylene, in particular from high-density polyethylene. This means, the supporting belt 7 is preferably a metal transport belt with no mesh at all.

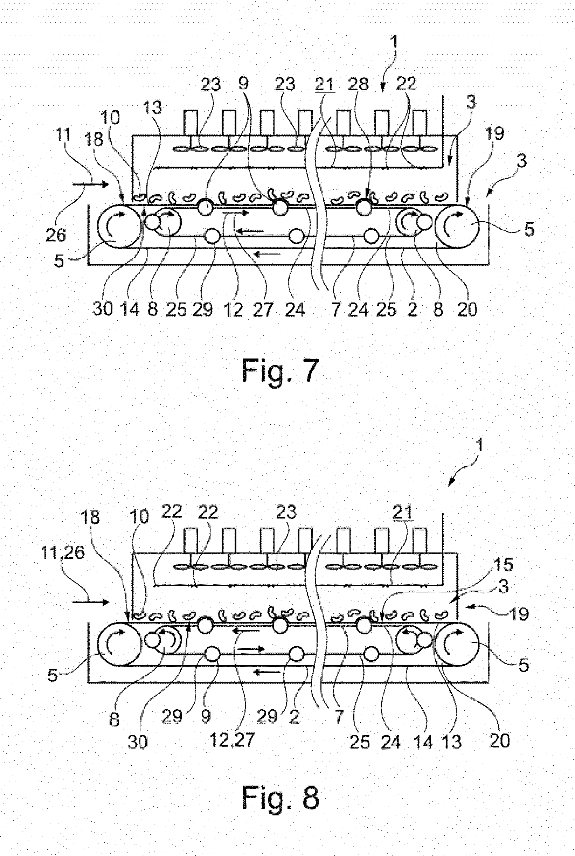

In use food products 10 (only one is shown by way of example in Fig. 1) are applied to a first side 15 of the conveying belt 2 at a first end 18 of a first upper run 13 thereof. The first side 15 is the outer side of the conveying belt 2 whereas the second side 30 being opposite to the first side 15 is the inner side of the conveying belt 2. The conveying belt 2 and with it the food products 10 are moved through the tunnel 3 by rotating one of the first drive drums 5 such that the first upper run 13 is moved in a processing direction 11. The food products 10 are unloaded from the conveying belt 2 at a second end 19 of the first upper run of the conveying belt 2 which is the opposite end compared to the first end 18. The movement of the first upper run 13 of the conveying belt 2 is defined by the direction of rotation of the first drive drums 5. Details of the movement will be described later on with reference to Figs. 7 and 8.

At the same time the supporting belt 7 is in one alternative moving in a supporting belt direction 12. This supporting belt direction 12 can be parallel to the processing direction 11 or antiparallel which is displayed by two respective arrows in Fig. 1. Different modes of movement are described later on with reference to Figs. 7 and 8 in particular. The conveying belt 2 defines an inner space 20, which is delimited by the first upper run 13 and the first lower run 14. The supporting belt 7 is positioned within the inner space 20.

The conveying belt 2, the supporting belt 7, the first drive drums 5, the second drive drums 8, the rollers 6 and the cross-rods 9 are arranged such that the first upper run 13 of the conveying belt 2 is in contact with the cross-rods 9 of a second upper run 24 of the supporting belt 7 whereas a first lower run 14 of the conveying belt 2 is not in contact with the supporting belt 7 or the cross-rods 9 of a second lower run 25 of the supporting belt 7. Therefore, if the velocities by which the conveying belt 2 and the supporting belt 7 are moved ensure a relative movement between the conveying belt 2 and the support belt 7 the food products 10 being disposed on the first side 15 of the conveying belt 2 in its first upper run 13 are agitated and, thus, displaced while passing the cross-rods 9. This ensures that the food product 10 is adhering neither to the conveying belt 2 nor to other food products 10 while freezing at least in part. The conveying belt 2 is further guided by rollers 16 in the first lower run 14 of the conveying belt 2 while the tension of the supporting belt 7 is maintained by the second drive drums 8.

The system 1 is in the first operating mode as displayed in Figs. 1 to 3 i.e. the conveying belt 2 being not fully tensioned but showing a slight slack between the cross-rods 9. This configuration of the conveying belt 2 is preferably used for individual quick freezing (IQF) of products. This first operating mode is usually chosen for food products which are small and have no preferred orientation. Examples for such food products are vegetables and/or meat pieces that are covered with sauce, food products to be used as pizza topping, e.g. diced cheese, sliced salami, etc. or the like In the first operating mode the first lower run 14 of the conveying belt 2 is pulled and, thus, the first upper run 13 of the conveying belt 2 is sliding through the tunnel 3 by moving the first upper run 13 actively by using the first drive drum 15 at the first end 18 of the first upper run 13 to drive the conveying belt 2 and, thus, sliding the conveying belt 2 through the tunnel 3. This creates the described slack of the first upper run 13 of the conveying belt 2.

Fig. 2 shows a perspective view of a part of the system 1 for processing food products. Fig. 3 is an identical view while the supporting belt 7 is only displayed in part. In particular, the cross-rods 9 of the supporting belt 7 can be seen while only one drive chain 31 of the supporting belt 7 is visible. The conveying belt 2 is in the first upper run 13 in contact with the cross-rods 9 of the second upper run 24 of the supporting belt 7 which is arranged within the conveying belt 2. The conveying belt 2 is slightly narrower than the supporting belt 7, that is the supporting belt 7 is protruding on both sides (with reference to the processing direction 11 and the second direction of movement 12) slightly over the conveying belt 2. The term slightly is to be understood in this context that the supporting belt 7 has a width being at most 15% larger than the respective width of the conveying belt 2 or that the supporting belt 7 has a width which is at most 6 cm [centimeters] larger than the width of the conveying belt 2. Preferably, the arrangement of the conveying belt 2 and the supporting belt 7 is symmetrical i.e. the supporting belt 7 is protruding identically on both sides of the conveying belt 2. Preferably, the conveying belt 2 and the supporting belt 7 are arranged such that the conveying belt 2 is not in contact with the drive chains 31 of the supporting belt 7 and can, thus, only contact the supporting belt 7 at the cross-rods 9 of the supporting belt 7. This facilitates the design of the system 1 for processing food products and ensures that the supporting belt 7 supports the conveying belt 2 only by its cross-rods 9. In turn, this ensures a reliable agitation and displacement of the food products 10 while passing the cross-rods 9.

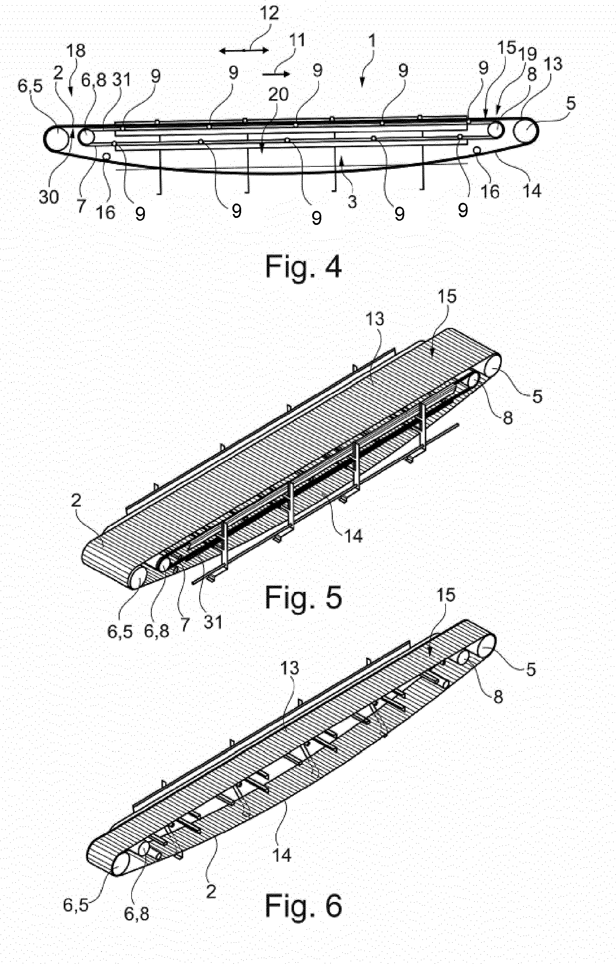

Figs. 4 to 6 display the system 1 for processing food products in a second operating mode. To avoid redundancies here only the differences in the second operating mode are discussed, whereas it is referred to the above description of the system 1 in the first operating mode. The second operating mode differs from the first operating mode by the tension of the conveying belt 2. While being not under maximum tension in the first operating mode the conveying belt 2 is at or close to a maximum tension of the conveying belt 2 resulting in a basically flat surface of the first side 15 of the first upper run 13 of the conveying belt 2 without significant slack. This tension is generated by driving the conveying belt 2 by the first drive drum 5 at the second end 19 of the first upper run 13 of the conveying belt 2 only. This means, in the second operating mode the first upper run 13 of the conveying belt 2 is pulled through the tunnel 3.

The second operating mode is preferably used for food products having large surfaces, e.g. burger patties or pizzas. For these the agitation should be smaller to avoid overturning the products due to the agitation. This is supported by the second operating mode. Furthermore, food products 10 with a rather dry surface are preferably processed in the second operating mode.

Fig. 7 displays a longitudinal section of an example of a system 1 for processing food products partial or complete freezing or chilling. The system 1 includes the components as discussed with respect to Figs. 1 to 6 above. For avoiding redundancies, a repetition of the description of Figs. 1 to 6 is omitted, it is referred to the above description. Although the sections in Figs. 7 and 8 are displayed with the second operating mode with a conveying belt 2 being essentially flat the following can be performed in the first operating mode as well with slack in the conveying belt 2 as described above. Liquid nitrogen is applied as a cooling agent to the first upper run 13 of the conveying belt 2.

Both the conveying belt 2 and the supporting belt pass through the tunnel 3. Liquid nitrogen is applied as cooling agent via the cooling agent supply 21 on the first side 15 of the first upper run 13 of the conveying belt 2 and on the food products 10 situated thereon. The cooling agent supply 21 comprises several nozzles 22 which are only in part provided with reference numerals. Furthermore, the tunnel 3 comprises several fans 23 (the reference numerals are only provided in part as well for reason of clarity). With these fans 23 the atmosphere within the tunnel 3 which comprises a significant amount of gaseous nitrogen due to the evaporation of the liquid nitrogen applied to the food products 10 and the conveying belt 2 is agitated to ensure an intense contact of the food products with the gaseous nitrogen to ensure an efficient cooling of the food products and to ensure a high degree of inertness in the atmosphere to avoid unintended reactions of the food products 10 with oxygen in the atmosphere. The same phenomenon of heat exchange will occur between the food products 10 on the conveying belt 2 when liquid carbonic dioxide is used as cooling agent and the snow sublimes due to heat exchange with the product 10 on the conveying belt 2.

The cross-rods 9 of the supporting belt 7 are provided with rollers 29 in this example. This facilitates the relative movement between the conveying belt 2 and the supporting belt 7. The supporting belt 7 comprises a second upper run 24 and a second lower run 25. The cross-rods 9 of the second upper run 24 of the supporting belt 7 are in contact with the first upper run 13 of the conveying belt 2 and support the same. The conveying belt 2 is moved by the first drive drum 5 at the second end 19 of the first upper run 13 with a first velocity 26 having the processing direction 11 and a first magnitude. This means, the first upper run 13 of the conveying belt 2 is pulled through the tunnel in this example. The supporting belt 7 is moved by the second drive drums 8 with a second velocity 27 having the supporting belt direction 12 and a second magnitude. In the example of Fig. 7 the second upper run 24 of the supporting belt 7 is moved in a supporting belt direction 12 which is parallel to the processing direction 11. This is understood in a co current agitation. The first magnitude differs from the second magnitude resulting in a relative movement between the conveying belt 2 and the supporting belt 7 resulting due to the cross-rods 9 being the only points of contact between the conveying belt 2 and the supporting belt 7 in an agitation and displacement of the food products 10 on the first side of the conveying belt 2 avoiding adhesion between the food products 10 and the conveying belt 2 and the food products 10 among themselves. The frequency of the agitation is defined based on the distance between adjacent cross-rods 9 and the respective local rises 28 due to the cross-rods 9 (for reasons of clarity only in part depicted with a reference numeral) and the difference between the first magnitude and the second magnitude, whereas the amount of the agitation is defined based on the amount of the local rise 28, i.e. the size of the cross-rods 9 and respective rollers 29 attached thereto and, to a certain degree, on the difference between the first magnitude and the second magnitude.

Fig. 8 displays the example shown in Fig. 7 in a different agitation mode. Reference is made to the description of Fig. 7 above. Here only the differences will be discussed. In contrast to the example in Fig. 7 displaying a co-current agitation in this agitation mode the supporting belt direction 12 is antiparallel to the processing direction 11. This means the first velocity 26 is antiparallel to the second velocity 27. The supporting belt 7 is moving in an opposite direction as the conveying belt 2. This counter current agitation allows different agitation frequencies and amounts. The frequency of the agitation is defined based on the distance between adjacent cross-rods 9 and the respective local rises 28 (for reasons of clarity only in part depicted with a reference numeral) and the sum of the first magnitude and the second magnitude, whereas the amount of the agitation is defined based on the amount of the local rise 28, i.e. the size of the cross-rods 9 and respective rollers 29 attached thereto and, to a certain degree, on the sum of the first magnitude and the second magnitude.

The system 1 for processing food products 10 by at least partly freezing of chilling comprises a conveying belt 2 for conveying the food products 10 through a cooling tunnel 3. The conveying belt 2 is supported by a supporting belt 7 with cross-rods 9 which can comprise rollers 29. Due to a relative movement between the conveying belt 2 and the supporting belt 7 the food products 10 get agitated by the cross-rods 9 defining local rises 28 both in the supporting belt 7 and the conveying belt 2. By this agitation the food products 10 are displaced and do not adhere to the conveying belt 2 and other food products 10. The system 1 is flexible in use as different velocities 26, 27 can be adjusted for the conveying belt 2 and the supporting belt 7 allowing to adjust the frequency and amount of agitation.

### Reference numerals

- 1: System for processing food products
- 2: Conveying belt
- 3: tunnel
- 5: first drive drum
- 6: roller
- 7: supporting belt
- 8: second drive drum
- 9: cross rod
- 10: food product
- 11: processing direction
- 12: supporting belt direction
- 13: first upper run
- 14: first lower run
- 15: first side
- 16: roller
- 18: first end
- 19: second end
- 20: inner space
- 21: cooling agent supply
- 22: nozzle
- 23: fan
- 24: second upper run
- 25: second lower run
- 26: first velocity
- 27: second velocity
- 28: local rise
- 29: roller
- 30: second side
- 31: drive chain

## Claims

1. System (1) for processing food products (10) by at least partial freezing or chilling, comprising
an endless conveying belt (2) having a first upper run (13) and a first lower run (14) being drivable by at least one first drive drum (5), said conveying belt (2) defining an inner space (20) which is delimited by the first upper run (13) and the first lower run (14),
an endless supporting belt (7) being provided within the inner space (20), being drivable by at least one second drive drum (8), said supporting belt (7) having a second upper run (24) and a second lower run (25),
wherein the first upper run (13) of the conveying belt (2) has a first side (15) for receiving the food products (10) and a second side (30) being opposite to the first side (15), said second side (30) being oriented towards the second upper run (24) of the supporting belt (7),
whereas the conveying belt (2) and the supporting belt (7) are at least in part situated within a tunnel (3),
said system (1) further comprising at least one cooling agent inlet (21) for providing a cooling agent into the tunnel (3),
wherein the supporting belt (7) comprises a multitude of cross-rods (9) each defining a local rise (28) oriented towards the conveying belt (2),
wherein the first upper run (13) of the conveying belt (2) is supported by the cross-rods (9) in the second upper run (24) of the supporting belt (7).

2. System (1) according to claim 1, wherein the cross-rods (9) comprise rollers (29) being in contact with the second upper run (24).

3. System (1) according to one of the preceding claims, wherein the supporting belt (7) is extending in a supporting belt direction, wherein the supporting belt (7) comprises two drive chains (31) forming the lateral parts of the supporting belt (7).

4. System (1) according to claim 3, wherein the two drive chains (31) are only connected to each other by cross-rods (9).

5. System (1) according to one of the preceding claims, wherein the system (1) comprises two first drive drums (5) being individually controllable allowing to move the first upper run (13) of the conveying belt in a processing direction (11).

6. System (1) according to one of the preceding claims, wherein the first upper run (13) of the conveying belt (2) is preferably movable in a processing direction (11), whereas the system further comprises two second drive drums (8) allowing to move the second upper run (24) of the supporting belt (7) in a supporting belt direction (12) being parallel or antiparallel to the processing direction (11).

7. System according to one of the preceding claims, wherein at least some cross-rods (9) at least span the width of the conveying belt (7).

8. Method for processing food products (10) by at least partial freezing or chilling using a system (1) according to one of the preceding claims, wherein the conveying belt (2) is moved such that the first upper run (13) is moved with a first velocity (26) having one defined processing direction (12) and a non-zero first magnitude and the food products (10) to be processed are positioned on the first side (15) of the first upper run (13) at a first end (18) of the first upper run (13) and are removed from the first side (15) of the first upper run (13) at a second end (19) of the first upper run (13) being downstream in the processing direction (12) from the first end (18) while cooling agent is introduced into the tunnel (3) intermittently or continuously.

9. Method according to claim 8, wherein the supporting belt (7) is moved such that the second upper run (24) is moved with a second velocity (27) having a pre-determinable supporting belt direction (12) and a non-zero second magnitude.

10. Method according to claim 9, wherein the first magnitude differs from the second magnitude.

11. Method according to claim 9 or 10, wherein the supporting belt direction (12) is parallel to the processing direction (11).

12. Method according to claim 9 or 10, wherein the supporting belt direction (12) is antiparallel to the processing direction (11).

13. Method according to one of claims 8 to 12, wherein the conveying belt (2) and the supporting belt (7) both are arranged with a tension allowing for a slack of the belts (2, 7) in the first upper run (13) and the second upper run (24).

14. Method according to one of claims 8 to 12, wherein the conveying belt (2) and the supporting belt (7) both are arranged with a maximum tension allowing a minimum slack of the belts (2, 7).

15. Method according to one of claims 8 to 14, wherein the cooling agent comprises liquid nitrogen or liquid carbonic dioxide.

## Patentansprüche

1. System (1) zur Verarbeitung von Nahrungsmitteln (10) durch zumindest Gefrieren oder Kühlen, umfassend
ein Endlosförderband (2) mit einem ersten Obertrum (13) und einem ersten Untertrum (14), das durch mindestens eine erste Antriebstrommel (5) antreibbar ist, wobei das Förderband (2) einen Innenraum (20) definiert, der durch den ersten Obertrum (13) und den ersten Untertrum (14) begrenzt wird,
ein Endlosstützband (7), das in dem Innenraum (20) vorgesehen ist und durch mindestens eine zweite Antriebstrommel (8) antreibbar ist, wobei das Stützband (7) einen zweiten Obertrum (24) und einen zweiten Untertrum (25) aufweist,
wobei der erste Obertrum (13) des Förderbandes (2) eine erste Seite (15) zum Empfangen der Nahrungsmittelprodukte (10) und eine zweite Seite (30) aufweist, die der ersten Seite (15) gegenüberliegt, wobei die zweite Seite (30) zum zweiten Obertrum (24) des Stützbandes (7) ausgerichtet ist,
wobei sich das Förderband (2) und das Stützband (7) mindestens teilweise innerhalb eines Tunnels (3) befinden,
wobei das System (1) ferner mindestens einen Kühlmitteleinlass (21) umfasst, um ein Kühlmittel in den Tunnel (3) bereitzustellen,
wobei das Stützband (7) eine Vielzahl von Querstangen (9) umfasst, die jeweils eine zum Förderband (2) hin gerichtete lokale Erhöhung (28) definieren,
wobei der erste Obertrum (13) des Förderbandes (2) durch die Querstangen (9) im zweiten Obertrum (24) des Stützbandes (7) gestützt wird.

2. System (1) gemäß Anspruch 1, wobei die Querstangen (9) Rollen (29) umfassen, die in Kontakt mit dem zweiten Obertrum (24) stehen.

3. System (1) gemäß einem der vorhergehenden Ansprüche, wobei das Stützband (7) in Richtung des Stützbandes verläuft, wobei das Stützband (7) zwei Antriebsketten (31) umfasst, die die Seitenteile des Stützbandes (7) bilden.

4. System (1) gemäß Anspruch 3, wobei die zwei Antriebsketten (31) nur durch Querstangen (9) miteinander verbunden sind.

5. System (1) gemäß einem der vorhergehenden Ansprüche, wobei das System (1) zwei erste Trommeln (5) umfasst, die einzeln steuerbar sind und es ermöglichen, den ersten Obertrum (13) des Förderbandes in einer Bearbeitungsrichtung (11) zu bewegen.

6. System (1) gemäß einem der vorhergehenden Ansprüche, wobei der erste Obertrum (13) des Förderbandes (2) vorzugsweise in einer Verarbeitungsrichtung (11) bewegbar ist, wobei das System ferner zwei zweite Antriebstrommeln (8) umfasst, die es ermöglichen, den zweiten Obertrum (24) des Stützbandes (7) in einer Stützbandrichtung (12) zu bewegen, die parallel oder antiparallel zur Verarbeitungsrichtung (11) verläuft.

7. System gemäß einem der vorhergehenden Ansprüche, wobei mindestens einige Querstangen (9) mindestens die Breite des Förderbandes (7) überspannen.

8. Verfahren zum Verarbeiten von Nahrungsmitteln (10) durch zumindest teilweises Gefrieren oder Kühlen unter Verwendung eines Systems (1) gemäß einem der vorhergehenden Ansprüche, wobei das Förderband (2) so bewegt wird, dass der erste Obertrum (13) mit einer ersten Geschwindigkeit (26) bewegt wird, die eine definierte Bearbeitungsrichtung (12) und eine von null verschiedene erste Größe aufweist, und die zu verarbeitenden Nahrungsmittel (10) auf der ersten Seite (15) des ersten Obertrums (13) an einem ersten Ende (18) des ersten Obertrums (13) positioniert und an einem zweiten Ende (19) des ersten Obertrums (13), das in Bearbeitungsrichtung (12) stromabwärts vom ersten Ende (18) liegt, von der ersten Seite (15) des ersten Obertrums (13) entnommen werden, während intermittierend oder kontinuierlich Kühlmittel in den Tunnel (3) eingeleitet wird.

9. Verfahren gemäß Anspruch 8, wobei das Stützband (7) so bewegt wird, dass der zweite Obertrum (24) mit einer zweiten Geschwindigkeit (27) bewegt wird, die eine vorgebbare Stützbandrichtung (12) und eine zweite Größe ungleich null aufweist.

10. Verfahren gemäß Anspruch 9, wobei die erste Größe von der zweiten Größe verschieden ist.

11. Verfahren gemäß Anspruch 9 oder 10, wobei die Richtung des Stützbandes (12) parallel zur Bearbeitungsrichtung (11) verläuft.

12. Verfahren gemäß Anspruch 9 oder 10, wobei die Richtung des Stützbandes (12) antiparallel zur Bearbeitungsrichtung (11) verläuft.

13. Verfahren gemäß einem der Ansprüche 8 bis 12, wobei das Förderband (2) und das Stützband (7) beide mit einer Spannung angeordnet sind, die einen Durchhang der Bänder (2, 7) im ersten Obertrum (13) und im zweiten Obertrum (24) zulässt.

14. Verfahren gemäß einem der Ansprüche 8 bis 12, wobei das Förderband (2) und das Stützband (7) beide mit einer maximalen Spannung angeordnet sind, die einen minimalen Durchhang des Bandes (2, 7) zulässt.

15. Verfahren gemäß einem der Ansprüche 8 bis 14, wobei das Kühlmittel flüssigen Stickstoff oder flüssiges Kohlendioxid umfasst.

## Revendications

1. Système (1) pour traiter des produits alimentaires (10) par surgélation ou réfrigération au moins partielle, comprenant
une courroie de transport sans fin (2) ayant une première course supérieure (13) et une première course inférieure (14), entraînable par au moins un premier tambour d'entraînement (5), ladite courroie de transport (2) définissant un espace intérieur (20) qui est délimité par la première course supérieure (13) et la première course inférieure (14),
une courroie de support sans fin (7) prévue à l'intérieur de l'espace intérieur (20), entraînable par au moins un second tambour d'entraînement (8), ladite courroie de support (7) ayant une seconde course supérieure (24) et une seconde course inférieure (25),
dans lequel la première course supérieure (13) de la courroie de transport (2) a un premier côté (15) pour recevoir les produits alimentaires (10) et un second côté (30) opposé au premier côté (15), ledit second côté (30) étant orienté vers la seconde course supérieure (24) de la courroie de support (7),
dans lequel la courroie de transport (2) et la courroie de support (7) sont au moins en partie situées à l'intérieur d'un tunnel (3),
ledit système (1) comprenant en outre au moins une entrée d'agent de refroidissement (21) pour fournir un agent de refroidissement dans le tunnel (3),
dans lequel la courroie de support (7) comprend une multitude de tiges transversales (9) définissant chacune une élévation locale (28) orientée vers la courroie de transport (2),
dans lequel la première course supérieure (13) de la courroie de transport (2) est supportée par les tiges transversales (9) dans la seconde course supérieure (24) de la courroie de support (7).

2. Système (1) selon la revendication 1, dans lequel les tiges transversales (9) comprennent des rouleaux (29) en contact avec la seconde course supérieure (24).

3. Système (1) selon l'une des revendications précédentes, dans lequel la courroie de support (7) s'étend dans une direction de courroie de support, dans lequel la courroie de support (7) comprend deux chaînes d'entraînement (31) formant les parties latérales de la courroie de support (7).

4. Système (1) selon la revendication 3, dans lequel les deux chaînes d'entraînement (31) sont seulement reliées l'une à l'autre par des tiges transversales (9).

5. Système (1) selon l'une des revendications précédentes, dans lequel le système (1) comprend deux premiers tambours d'entraînement (5) individuellement commandables, permettant de déplacer la première course supérieure (13) de la courroie de transport dans une direction de traitement (11).

6. Système (1) selon l'une des revendications précédentes, dans lequel la première course supérieure (13) de la courroie de transport (2) est de préférence déplaçable dans une direction de traitement (11), dans lequel le système comprend en outre deux seconds tambours d'entraînement (8) permettant de déplacer la seconde course supérieure (24) de la courroie de support (7) dans une direction de courroie de support (12) parallèle ou antiparallèle à la direction de traitement (11).

7. Système selon l'une des revendications précédentes, dans lequel au moins certaines tiges transversales (9) couvrent au moins la largeur de la courroie de transport (7).

8. Procédé pour traiter des produits alimentaires (10) par surgélation ou réfrigération au moins partielle en utilisant un système (1) selon l'une des revendications précédentes, dans lequel la courroie de transport (2) est déplacée de telle sorte que la première course supérieure (13) soit déplacée avec une première vitesse (26) ayant une direction de traitement définie (12) et une première amplitude non nulle, et les produits alimentaires (10) destinés à être traités sont positionnés sur le premier côté (15) de la première course supérieure (13) à une première extrémité (18) de la première course supérieure (13) et sont enlevés du premier côté (15) de la première course supérieure (13) à une seconde extrémité (19) de la première course supérieure (13) en aval dans la direction de traitement (12) par rapport à la première extrémité (18) alors que l'agent de refroidissement est introduit dans le tunnel (3) de façon intermittente ou en continu.

9. Procédé selon la revendication 8, dans lequel la courroie de support (7) est déplacée de telle sorte que la seconde course supérieure (24) soit déplacée avec une seconde vitesse (27) ayant une direction de courroie de support pré-déterminable (12) et une seconde amplitude non nulle.

10. Procédé selon la revendication 9, dans lequel la première amplitude est différente de la seconde amplitude.

11. Procédé selon la revendication 9 ou 10, dans lequel la direction de courroie de support (12) est parallèle à la direction de traitement (11).

12. Procédé selon la revendication 9 ou 10, dans lequel la direction de courroie de support (12) est antiparallèle à la direction de traitement (11).

13. Procédé selon l'une des revendications 8 à 12, dans lequel la courroie de transport (2) et la courroie de support (7) sont toutes les deux agencées avec une tension permettant un mou des courroies (2, 7) dans la première course supérieure (13) et la seconde course supérieure (24).

14. Procédé selon l'une des revendications 8 à 12, dans lequel la courroie de transport (2) et la courroie de support (7) sont toutes les deux agencées avec une tension maximum permettant un mou minimum des courroies (2, 7).

15. Procédé selon l'une des revendications 8 à 14, dans lequel l'agent de refroidissement comprend de l'azote liquide ou du dioxyde carbonique liquide.
